# EUROPEAN PATENT APPLICATION

(11) **EP 1 156 628 A2**
(43) Date of publication of application: **21.11.2001**
(21) Application number: 01304261.9
(22) Date of filing: 14.05.2001
(51) Int. Cl.: H04L 12/46

(54) **Bridge unit for IEEE1394 serial bus**

(30) Priority: 16.05.2000 JP 2000143637
(71) Applicant: SONY CORPORATION, Tokyo 141 (JP)
(72) Inventor: Niwa, Yoshikatsu, Shinagawa-ku, Tokyo (JP); Akai, Takashi, Shinagawa-ku, Tokyo (JP)
(74) Representative: DeVile, Jonathan Mark, Dr.

(57) **Abstract**

To make it possible to transmit a transmission packet which always includes correct information for identifying a transmission end. In a bridge portal 103b, a transmission packet, which is transmitted from a 13940HCI section 124b to a Link section 125b, is made to include transmission end information for indicating whether the transmission end of the transmission packet is a self-node, or the transmission end thereof is another node residing in another bus. When an asynchronous data packet is produced in the Link section 125b based on the transmission packet, if another node is a transmission end, the node ID of another node included in the transmission packet is used as a source ID. Contrarily, if the self-node is a transmission end, the node ID of the self-node is used. In this manner, it becomes possible to transmit an asynchronous data packet which always include the node ID of the correct transmission end to the 1394-bus 102 (Bus #2).

## Description

The present invention relates to an interface unit of the digital serial data, a bridge portal utilizing the same, and a method for transmitting digital data.

As the standard defining the interface for supporting high-speed data transmission and real-time transmission so as to achieve an interface for multimedia data transmission, IEEE1394-1995 high-performance serial bus standard (hereinafter, referred to as "IEEE1394 standard") is known.

The IEEE1394 standard defines data transmission at rates of 100Mbps (98.304MKbps), 200Mbps (196.608Mbps), and 400Mbps (393.216Mbps), and defines 1394 port with higher transmission rate to have compatibility with its lower transmission rate. This standard allows data transmissions at rates of 100Mbps, 200Mbps, and 400Mbps in one and the same network.

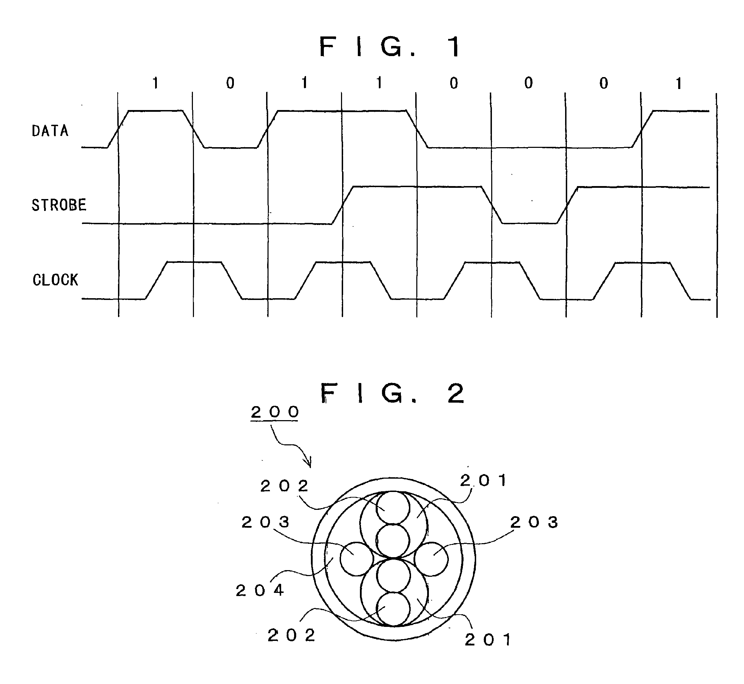

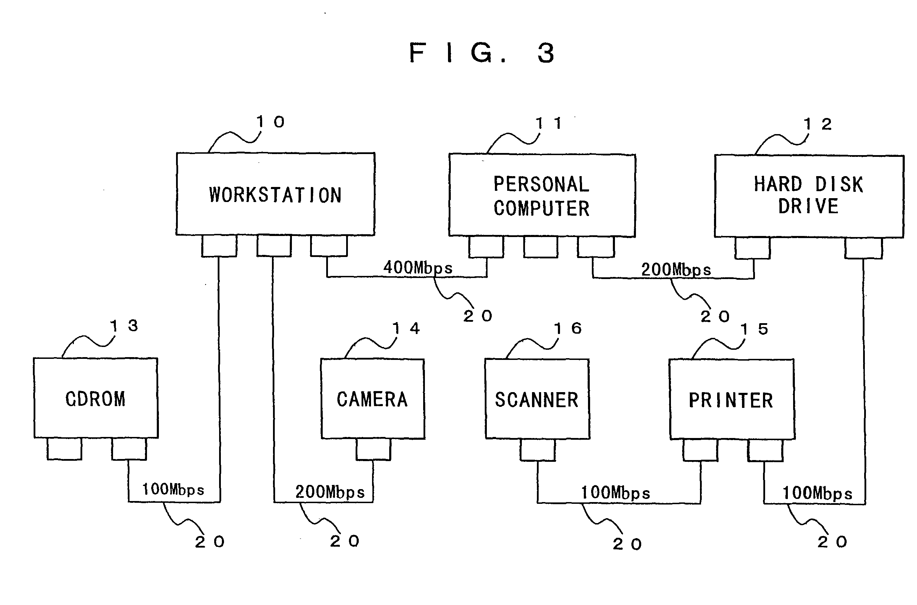

In addition, the IEEE1394 standard employs transmission format in Data/Strobe link (DS-Link) coding method. In the transmission format in the Data/Strobe link coding method, as shown in Fig. 1, transmission data is converted into two signals including data and strobe for compensating the signal thereof, and the exclusive OR of these two signals is obtained, thereby generating clocks. The IEEE1394 standard also defines a cable 200 having a structure such as shown in a cross-sectional view of Fig. 2, including: a first shielding layer 201; two pairs of twisted pair lines (i.e. signal lines) 202 shielded by the first shielding layer 201; power supply lines 203; and a second shielding layer 204 which entirely covers the cable constituted by tying the first shielding layer 201, the twisted pair lines 202, and the power supply lines 203 together.

Fig. 3 is a diagram showing an exemplary structure of a network constituted by employing the IEEE1394 standard. A workstation 10, a personal computer 11, a hard-disk drive 12, a CD-ROM drive 13, a camera 14, a printer 15, and a scanner 16 together constitute an IEEE1394 node, and are connected to each other via IEEE1394 buses 20. The connection methods in conformity with the IEEE1394 standard are categorized into two: a daisy chain connection and a node multipoint connection. In the daisy chain connection method, 16 nodes (i.e. equipment having an IEEE1394 port) can be connected at maximum, and the longest distance between adjacent nodes is 4.5m. As shown in Fig. 3, in combination with the daisy chain connection method and the node multipoint connection method, 63 nodes, which is the maximum number in the IEEE1394 standard, can be connected.

The IEEE1394 standard allows the connection and disconnection of the cable having the structure described above in the state where equipment operates, that is, the equipment is turned on. At the time when a node is added or deleted, the bus is reset and the reconfiguration of the 1394-network is conducted. At this time, the device of the node connected to the network can be automatically identified. The identification and arrangement of the connected device are conducted on the interface.

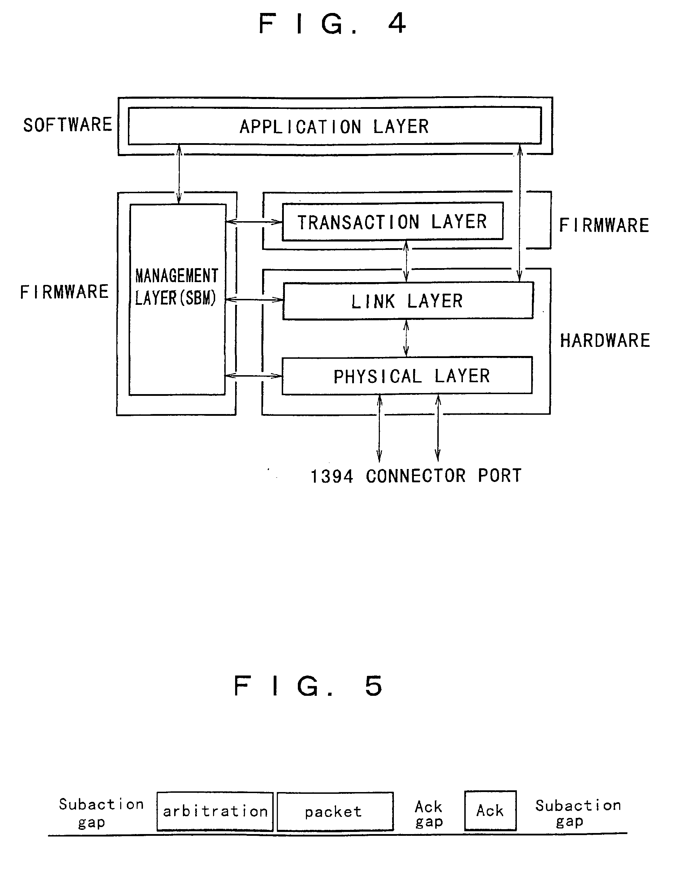

Fig. 4 is a diagram showing the constituent elements and the protocol architecture of the interface which conforms to the IEEE1394 standard. The interface is constituted by hardware and firmware.

The hardware is constituted by a physical layer (PHY) and a link layer. The physical layer directly drives a signal which conforms to the IEEE1394 standard. The link layer includes a host interface and a physical layer interface.

The firmware is constituted by a transaction layer and a management layer. The transaction layer is constituted by a management driver for performing an actual operation for the interface which conforms to the IEEE1394 standard. The management layer is constituted by a driver for managing a network, and is referred to as a serial bus management (SBM) and conforms to the IEEE1394 standard

The application layer is constituted by a software used by a user, and a management software for interfacing the transaction layer and the management layer.

In the IEEE1394 standard, the transmission operation performed within the network is referred to as a subaction, and the following two subactions are defined. One of the subactions is in a non-synchronous transmission mode referred to as an "asynchronous" mode, while the other is in a real-time transmission mode referred to as an "isochronous" mode in which the transmission band is secured. Each of the subactions is further categorized in the following three parts which assume the following states, respectively:
An arbitration state;
A packet transmission state; and
An acknowledgement state,
wherein the acknowledgement state is omitted from the "isochronous" mode.

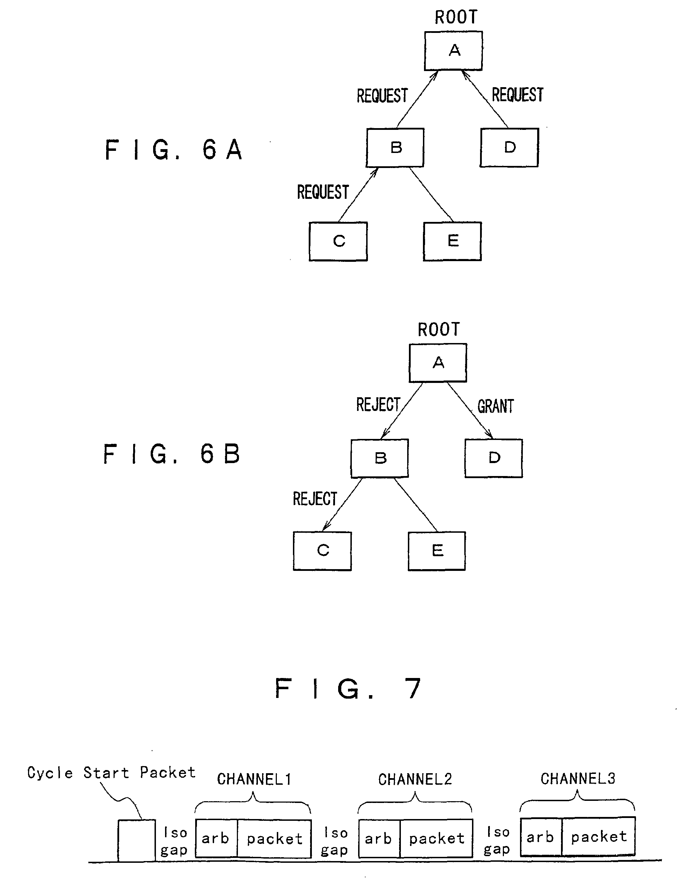

In the subaction in the asynchronous mode, non-synchronous transmission is conducted. Fig. 5 is a diagram showing the transition state with the lapse of time in the asynchronous transmission mode. In Fig. 5, the initial subaction gap shows that the bus is in the idle state. The time during which the subaction gap lasts is monitored to judge whether the immediately preceding transmission has finished and another new transmission is possible.

If the idle state lasts for a specified period of time or longer, the node which wishes to conduct transmission judges that the bus is usable, and performs an arbitration for obtaining the right to use the bus. In an actual operation, the judgment whether or not to stop the bus is conducted by the node A located at the root, as shown in Figs. 6A and 6B. After the node wishing the transmission obtains the right to use the bus in this arbitration, the node conducts transmission of the next data, that is, packet transmission. After the data transmission, the node which has received the data conducts acknowledgement in response to the data transmission by returning a data receipt acknowledgement return code (ack). By the execution of the acknowledgement, it can be acknowledged from the data receipt acknowledgement return code (ack) that the transmission has normally conducted in both the transmission node and the receiving node.

After that, the state is returned to the subaction gap, that is, to the bus idle state again, and the transmission operation as described above is repeated.

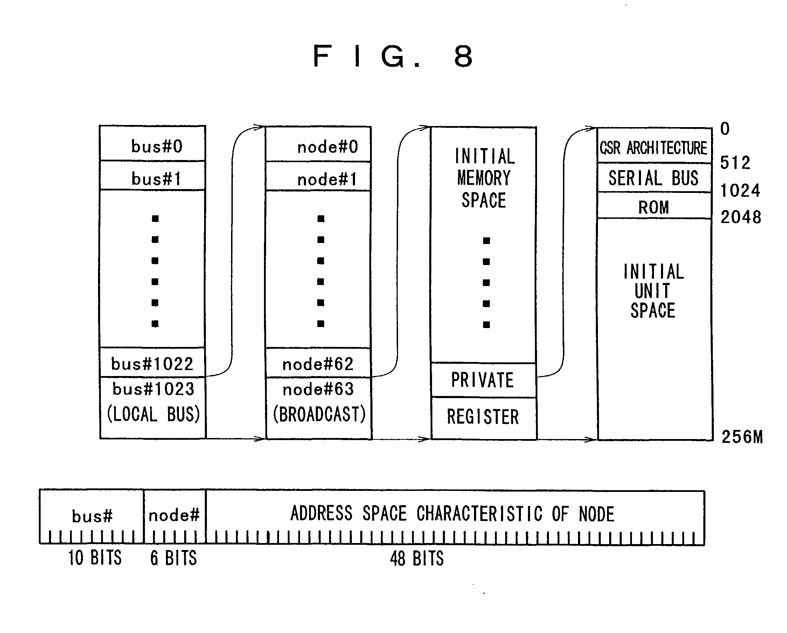

In the subaction in the isochronous mode, the transmission basically in the same structure as of the subaction in the asynchronous mode is executed, except that, as shown in Fig. 7, the transmission in the isochronous subaction is assigned with higher priority and is executed prior to the transmission in the asynchronous subaction. The isochronous transmission in the isochronous subaction is executed subsequent to the cycle start packet which is issued at about every 8 kHz, and is assigned with higher priority to be executed prior to the asynchronous transmission in the asynchronous subaction. In this manner, the isochronous transmission is in the transmission mode in which the transmission band is secured, thereby attaining the transmission of the real-time data.

In the case where a plurality of nodes execute real-time data transmission through isochronous transmission, the transmission data is provided with a channel ID for identifying its content (i.e. transmission node), so that only the require real-time data is received.

The address space defined in the IEEE1394 standard has a structure such as shown in Fig. 8. This structure conforms to the CSR architecture defined by the ISO/IEC13213 standard for 64-bit fixed addressing (hereinafter, referred to as a "CSR architecture"). As shown in Fig. 8, the upper 16 bits in each address indicate a node ID for providing an address space to the node. The node ID is divided into the bus number with 10 bits and the node number with 6 bits, and designates the bus ID by its upper 10 bits, while designates the physical ID (i.e. the node ID in a narrow meaning) by its lower 6 bits. The bus ID and the physical ID use a value obtained when all bits are set to 1 for a special purpose. Therefore, this addressing method provides 1023 buses and nodes each capable of designating 63 individual addresses.

In order that the same mounting method such as a register construction and data construction is applicable to the interface units of IEEE1394 standard, the IEEE1394 standard defines 1394 Open Host Controller Interface (hereinafter, referred to as "1394OHCI"). This definition also defines, on top of the above, a direct memory access (DMA) section and a host interface for performing high-speed transmission.

The 1394OHCI is applicable to both the method for non-synchronous transmission referred to as asynchronous transmission, and the method for synchronous transmission referred to as isochronous transmission. In the asynchronous transmission, any of the requests/responses defined by the IEEE1394 standard is possible. In addition, a packet can be transmitted by reading data from a host memory through DMA transmission. When a packet is received, data can be written on a host memory.

In the isochronous transmission, a DMA controller is mounted for each of the transmission and receipt of data. The DMA controllers can control DMA channels from four channels at minimum to 32 channels at maximum. A function of cycle master defined by the IEEE1394 standard-is also equipped. Since a cycle master and a counter are mounted within the 13940HCI, cycle start packet can be transmitted.

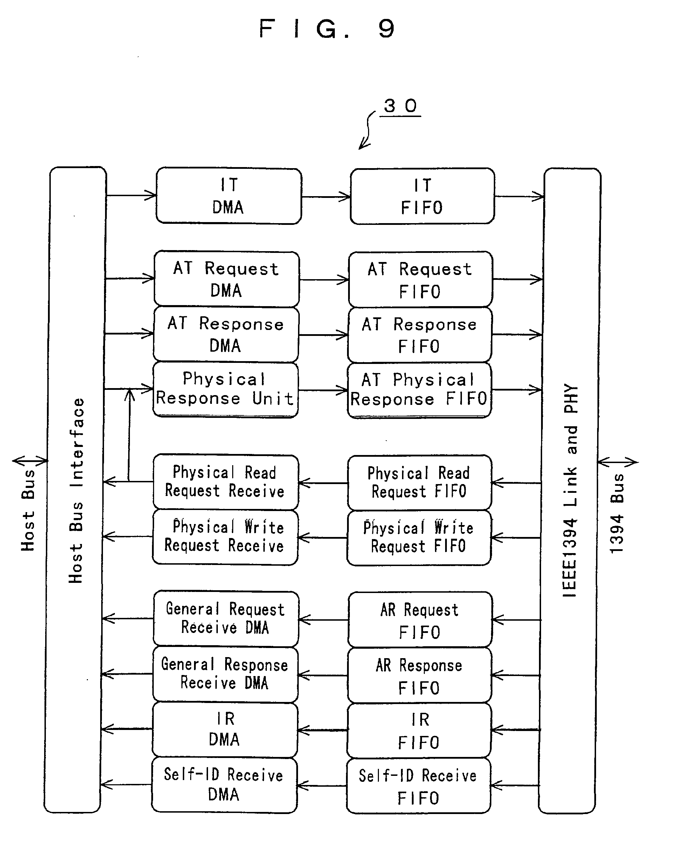

Fig. 9 is a diagram showing a structure of the hardware of the 1394OHCI. A 1394OHCI section 30 includes: a first-in first-out (FIFO) section provided to an interface section between a physical layer and a link layer which conform to the IEEE1394 standard (hereinafter, referred to as "1394 Link and PHY section"), and a host bus; a DMA controller for controlling DMA transmission; and a host bus interface section. The FIFO section is grouped into small sections in accordance with the kind of packet data. The DMA controller section is prepared so as to correspond to the kind of the FIFO section.

In receiving asynchronous data and isochronous data, the data packet which has been received by the 1394 Link and PHY section is properly selected in accordance with the kind of the packet, and then is sent to the FIFO section. The data which has been sent to the FIFO section is sent to the host bus interface section via the corresponding DMA controller section, and then is transmitted to the host bus.

In transmitting asynchronous data and isochronous data, the data packet is sent to the FIFO section corresponding to the DMA controller section which corresponds to the kind of the data packet via the host bus interface section. Then, the packet is sent from the 1394 Link and PHY section to the IEEE1394 bus.

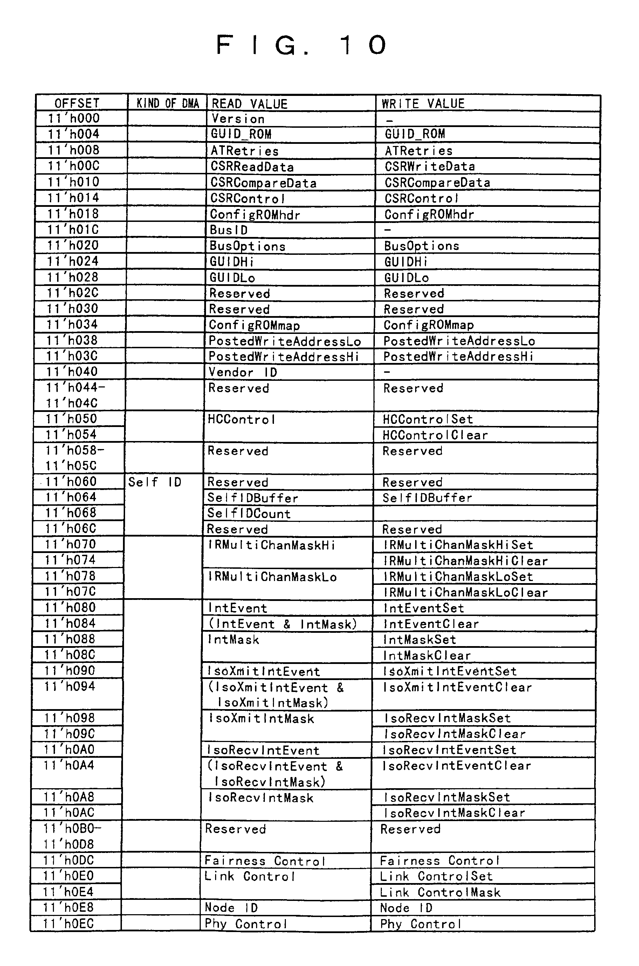

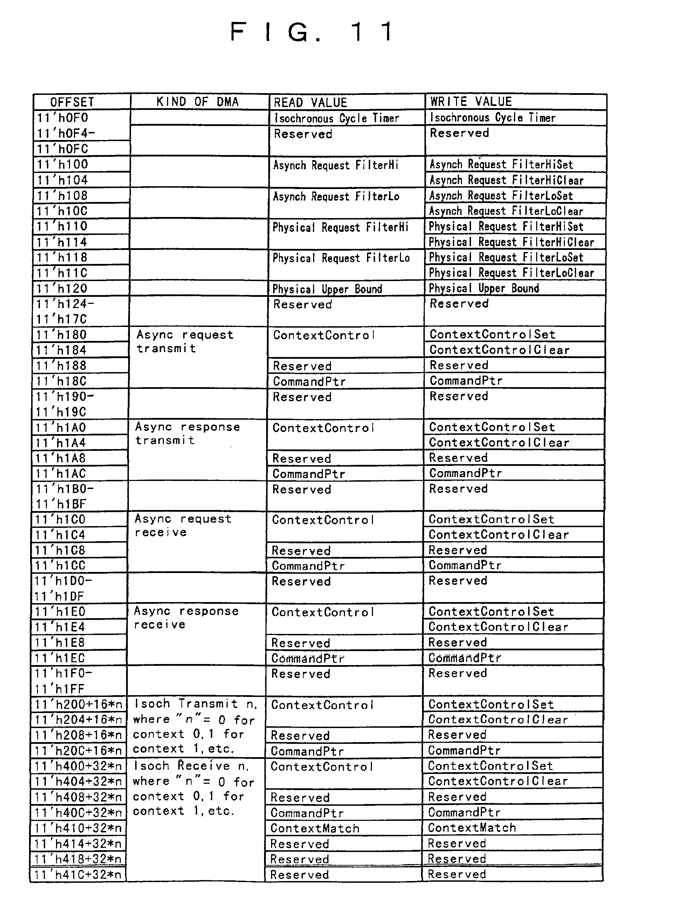

Hereinafter, the register space defined by the 1394OHCI will be described. Figs. 10 and 11 are diagrams respectively showing a structure of the register. By mapping the register shown in Figs. 10 and 11 into the space where the host bus is present, the access from the host bus becomes possible. The contents of the register are roughly classified into, although the detailed description thereof will be omitted, a section for setting isochronous transmission, a section for setting asynchronous transmission, a section for setting interruption, other sections as to the settings of the IEEE1394 standard, and the like.

In the IEEE1394 standard, when a network is constructed, there are limitations such as the number of devices to be connected, the number of hops, transmission band and the like. These limitations cause the network to be subjected to various restrictions on its size or easiness of handling. As a method for alleviating these restrictions and achieving a network with larger size, 1394-bus bridge is in the process of standardization right now.

In the status control register employed in the IEEE1394 standard, a bus number field with 10 bits and a node number field with 6 bits are defined. The definition as to the behaviors of 63 nodes within one bus expressed by the node number field is the IEEE1394 standard. The bus number field with 10 bits is used for the node number field, and numbers are allocated to the bus number field. In this manner, expansion into 1023 buses at maximum becomes possible. In an attempt to standardize the protocol for the entire 1394-network such as described above, there is 1394-bus bridge standard.

A 1394-bridge has a function for transmitting data across buses. The 1394-bridge has to be present between adjacent buses. The 1394-bridge is constituted by a pair of two nodes referred to as portals. Each portal conducts processing for the bus to which the portal itself is connected and the bus to which the other portal is connected.

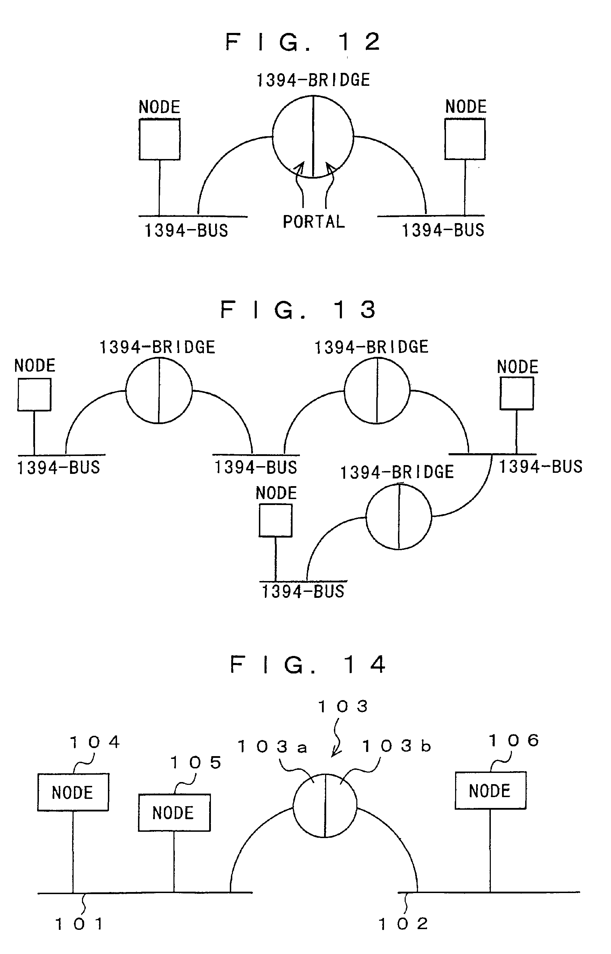

The 1394-network using the 1394-bridge such as described above has a structure shown in Fig. 12. The round section connecting the buses is the 1394-bridge, and each of the half-round section is a portal. In addition, as shown in Fig. 13, when a plurality of the 1394-bridges are used to connect buses, 1023 buses, which is the maximum number in the standard, can be connected.

The 13940HCI in the present specification described above corresponds to only the IEEE1394 standard. Therefore, no arrangement is made to correspond to the 1394-bridge and to function as a bridge portal. In this situation, if the 1394OHCI is applied to the bridge portal, no node information about the transmission end is included in the transmission packet sent from the 1394OHCI section to the 1394 Link and PHY section. Therefore, a problem arises in that, even if the transmission node is another node residing in another bus, the identification information of self-node is used as information for identifying the transmission end of the transmission packet (i.e. asynchronous data packet) sent from the 1394 Link and PHY section to the IEEE1394 bus.

Various aspects and features of the present invention are defined in the appended claims.

An interface unit for digital serial data according to the present invention includes: a first packet producing means for producing a first transmission packet at least including transmission information, transmission end information for identifying whether a transmission end from which the transmission information is transmitted is a self-node or another node residing in another bus, and if the transmission end information indicates that the transmission end is another node, further including information for identifying another node; and a second packet producing means for producing, based on the first transmission packet which has been produced by the first packet producing means, a second transmission packet at least including the transmission information, and node information about the transmission end from which the transmission information is transmitted, by use of identification information about the self-node as the node information about the transmission end when the transmission end information included in the first transmission packet indicates that the transmission end is a self-node, while by use of identification information about another node included in the first transmission packet when the transmission end information indicates that the transmission end is another node.

Embodiments of the present invention relate to interfaces for digital serial data in which a first transmission packet including transmission end information for identifying whether the transmission end from which information is transmitted is a self-node or another node residing in another bus is produced, and also a second transmission packet into which information for identifying the transmission end is inserted with reference to the transmission end information is produced, thereby allowing transmission of transmission packet which always contains correct information for identifying transmission end.

Embodiments of the present invention can provide an interface unit for digital serial data capable of transmitting a transmission packet always including correct information for identifying a transmission end.

An interface unit for digital serial data according to the present invention includes: a physical layer section connected to an IEEE1394 bus; a 1394 open host controller interface section connected to a host bus; and a link layer section inserted between the physical layer section and the interface section. A first transmission packet is sent from the interface section to the link layer section, and a second transmission packet is sent from the physical layer section to the IEEE1394 bus. The first transmission packet at least includes transmission information, transmission end information for identifying whether a transmission end from which the transmission information is transmitted is a self-node or another node residing in another bus, and if the transmission end information indicates that the transmission end is another node, further includes identification information about another node. The second transmission packet at least includes transmission information, and node information about a transmission end from which the transmission information is transmitted, and uses identification information about a self-node as node information about the transmission end when the transmission end information included in the first transmission packet indicates that the transmission end is a self-node, while uses identification information about another node included in the first transmission packet when the transmission end information indicates that the transmission end is another node.

A bridge portal according to the present invention is a bridge portal constituting a bridge portal for connecting a plurality of IEEE1394 buses. The bridge portal includes: a physical layer section connected to the IEEE1394 buses; a 1394 open host controller interface section connected to a host bus; and a link layer section inserted between the physical layer section and the interface section. A first transmission packet is sent from the interface section to the link layer section, and a second transmission packet is sent from the physical layer section to the IEEE1394 bus. The first transmission packet at least includes transmission information, transmission end information for identifying whether a transmission end from which the transmission information is transmitted is a self-node or another bus residing in another bus, and if the transmission end information indicates that the transmission end is another node, further includes identification information about another node. The second transmission packet at least includes transmission information, and node information about a transmission end from which the transmission information is transmitted, and uses identification information about a self-node as node information about the transmission end when the transmission end information included in the first transmission packet indicates that the transmission end is a self-node, while uses identification information about another node included in the first transmission packet when the transmission end information indicates that the transmission end is another node.

In the present invention, for example, a first transmission packet is sent from the 1394 open host controller interface section to the link layer. The first transmission packet is produced in such a manner that it at least includes: transmission information; transmission end information for identifying whether the transmission end from which the transmission information is transmitted is a self-node or another node residing in another bus; and, if the transmission end information indicates that another node is a transmission end, further includes information for identifying another node.

In addition, a second transmission packet is sent from the physical layer section to the IEEE1394 bus. The second transmission packet is produced based on the first transmission packet. The second transmission packet is produced in such a manner that it at least includes: transmission information; and node information about the transmission end from which the transmission information is transmitted. If the transmission end information included in the first transmission packet indicates that the self-node is a transmission end, the information for identifying self-node is used as node information about the transmission end. Contrarily, if the transmission end information indicates that another node is a transmission end, identification information about another node included in the first transmission packet is used as node information about the transmission end.

As described above, the first transmission packet including transmission end information for identifying whether the transmission end from which the transmission information is transmitted is a self-node or another node residing in another bus. Based on thus-produced first transmission packet, a second transmission packet into which information for identifying the transmission end is produced with reference to the transmission end information. With this arrangement, it becomes possible to send a transmission packet (i.e. a second transmission packet) which always includes correct information for identifying transmission end.

The invention will now be described by way of example with reference to the accompanying drawings, throughout which like parts are referred to by like references, and in which:
FIG. 1 is a diagram showing a structure of transmission data which conforms to the IEEE1394 standard;
FIG. 2 is a cross-sectional view of a cable defined by the IEEE1394 standard;
FIG. 3 is a block diagram showing an exemplary structure of a network constituted by employing the IEEE1394 standard;
FIG. 4 is a diagram showing constituent elements and the protocol architecture of the interface which conform to the IEEE1394 standard;
FIG. 5 is a diagram showing a packet in the asynchronous transmission;
FIGS. 6A and 6B are the diagrams for illustrating arbitration;
FIG. 7 is a diagram showing a packet in the isochronous transmission;
FIG. 8 is a diagram showing addressing in the CSR architecture;
FIG. 9 is a block diagram showing a structure of the hardware of the 13940HCI section;
FIG. 10 is a diagram showing a structure of the register (1/2) in the 1394OHCI;
FIG. 11 is a diagram showing a structure of the register (2/2) in the 1394OHCI;
FIG. 12 is a block diagram showing a basic structure of the 1394-network which uses the 1394-bridge;
FIG. 13 is a block diagram showing an exemplary structure of the 1394-network which uses a plurality of 1394-bridges.
FIG. 14 is a block diagram showing an exemplary structure of a 1394-network using a 1394-bridge;
FIG. 15 is a block diagram showing an exemplary structure of a 1394-bridge in detail;
FIG. 16 is a diagram showing a format of a transmission packet used for read quadlet request defined by the 1394OHCI;
FIG. 17 is a diagram showing a transaction code;
FIG. 18 is a diagram showing a format of a transmission packet used for write quadlet request defined by the 194 OHCI;
FIG. 19 is a diagram showing a format of a transmission packet used for read block request defined by the 1394OHCI;
FIG. 20 is a diagram showing a format of a transmission packet used for write block request defined by the 1394OHCI;
FIG. 21 is a diagram showing a format of a transmission packet used for lock request defined by the 1394OHCI;
FIG. 22 is a diagram showing an extended transaction code;
FIG. 23 is a diagram showing a format of a transmission packet used for write response defined by the 13940HCI;
FIG. 24 is a diagram showing a format of a transmission packet used for read quadlet response defined by the 13940HCI;
FIG. 25 is a diagram showing a format of a transmission packet use for read block response defined by the 1394OHCI;
FIG. 26 is a diagram showing a format of a transmission packet used for lock response defined by the 1394OHCI;
FIG. 27 is a diagram showing a format of a transmission packet in a newly defined remote transmission; and
FIG. 28 is a diagram showing a data format of an asynchronous data packet which conforms to the IEEE1394 standard.

Hereinafter, embodiments of the present invention will be described with reference to drawings.

Fig. 14 is a diagram showing an exemplary structure of a 1394-network using a 1394-bridge. The network includes a 1394-bus (Bus #1) 101, a 1394-bus (Bus #2) 102, a 1394-bridge 103, nodes 104 and 105 connected to the 1394-bus 101, and a node 106 connected to the 1394-bus 102. The 1394-bridge 103 is constituted by a pair of two bridge portals 103a and 103b. The bridge portals 103a and 103b are present as nodes. The bridge portal 103a is connected to the 1394-bus 101, and the bridge portal 103b is connected to the 1394-bus 102.

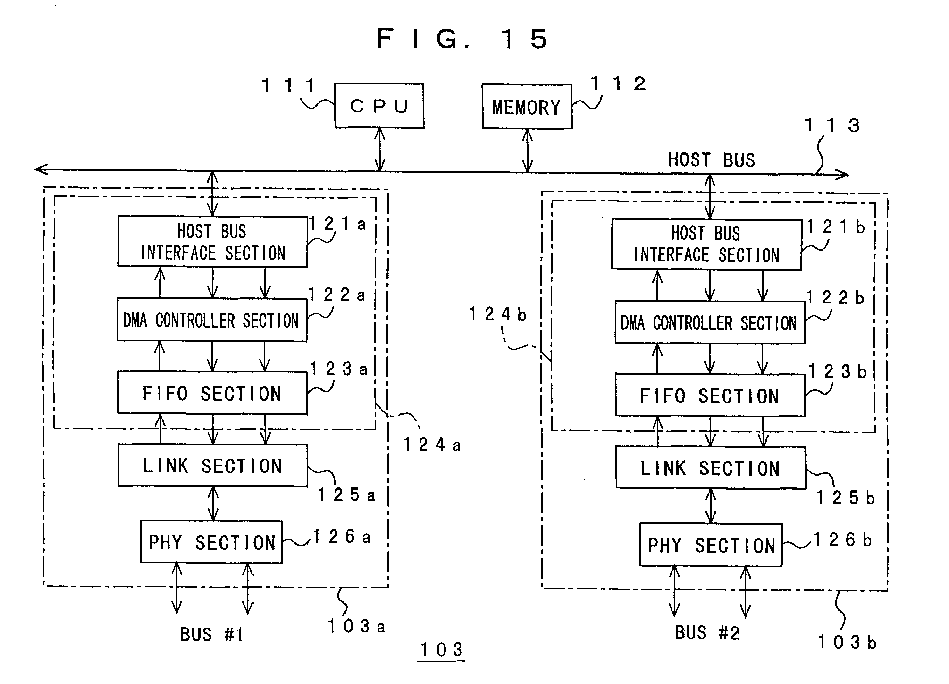

In this embodiment, each of the bridge portals 103a and 103b includes an interface unit for IEEE1394 digital serial data using 1394OHCI. Fig. 15 is a diagram showing a detailed structure of the 1394-bridge 103.

The 1394-bridge 103 includes a central processing unit for control 111, a memory 112, a host bus 113, a bridge portal 103a, and a bridge portal 103b.

The bridge portal 103a includes a 1394OHCI section 124a constituted by a host bus interface section 121a, a DMA controller section 122a, and a FIFO section 123a, a link layer (Link) section 125a, and a physical layer (PHY) section 126a. Similarly, the bridge portal 103b includes a 1394OHCI section 124b constituted by a host bus interface section 121b, a DMA controller section 122b, and a FIFO section 123b, a link layer (Link) section 125b, and a physical layer (PHY) section 126b. Each of the 1394OHCI sections 124a, 124b is made to have a hardware with the same structure as that shown in Fig. 9 described above.

As has already been described, asynchronous transmission is possible in the 1394OHCI. Hereinafter, a method for executing asynchronous transmission in the 1394OHCI will be described.

In the 1394OHCI, a format of the transmission packet for executing asynchronous transmission is defined. A host side produces a packet to be transmitted, and sets the memory address of the packet to the 13940HCI. Then, the host side starts transmission to execute asynchronous transmission.

The use of a transmission packet is categorized into a read quadlet request, a read block request, a read quadlet response, a read block response; a write quadlet request, a write block request, a write response, a lock request, and a lock response.

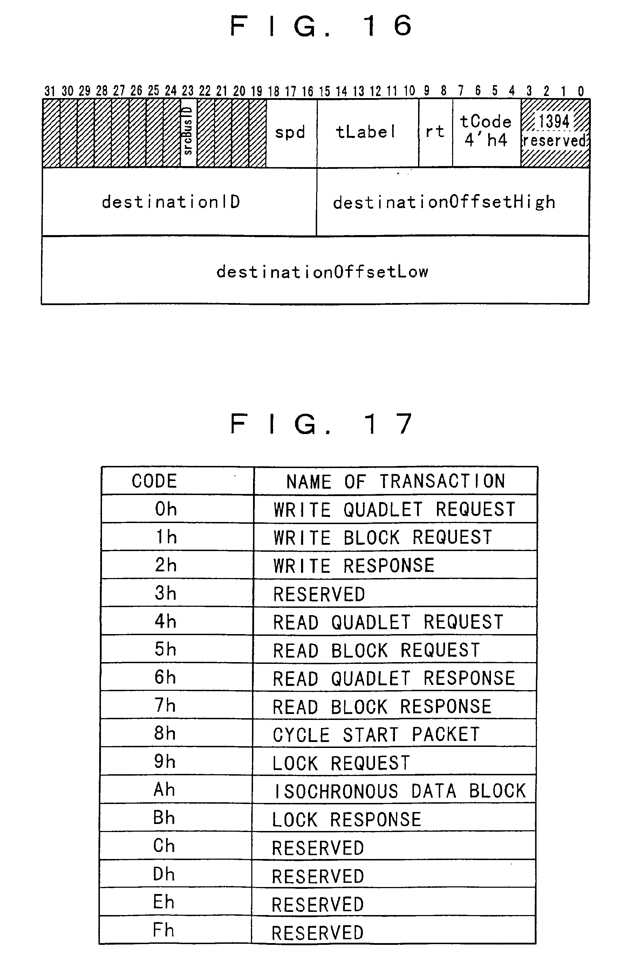

Fig. 16 is a diagram showing a format of a transmission packet used for read quadlet request. The transmission packet is constituted by a source bus ID (srcBusID), a speed (spd), a transaction label (tLabel), a retry code (rt), a transaction code (tCode), a destination ID (destination ID), and a destination offset (destinationOffset). The remaining diagonally shaded regions are reserved regions, and "0" is assigned thereto.

The source bus ID (srcBusID) is used for determining whether a local bus should be designated or a value resisting in the Node ID register of the 13940HCI should be designated for the bus ID field of the packet to be transmitted. To the speed (spd), the speed of the transmission packet is set. To the transaction label (tLabel), a value specific to the packet is set. To the retry code (rt), a method of retry executed in the case where transmission error occurs is set. The method of retry is defined by the IEEE1394 standard.

To the transaction code (tCode), the transaction code defined by the IEEE1394 standard is set. The transaction code defined by the IEEE1394 standard is as shown in Fig. 17. Since the read quadlet request is determined as "4", the value of "4" is set to the field of the read quadlet request. To the destination ID (destinationID), the node ID of the transmission target is set. To the destination offset (destinationOffset), an address in the node of the transmission target into which data is to be read is set. By setting the parameters described above, the transmission packet can be produced.

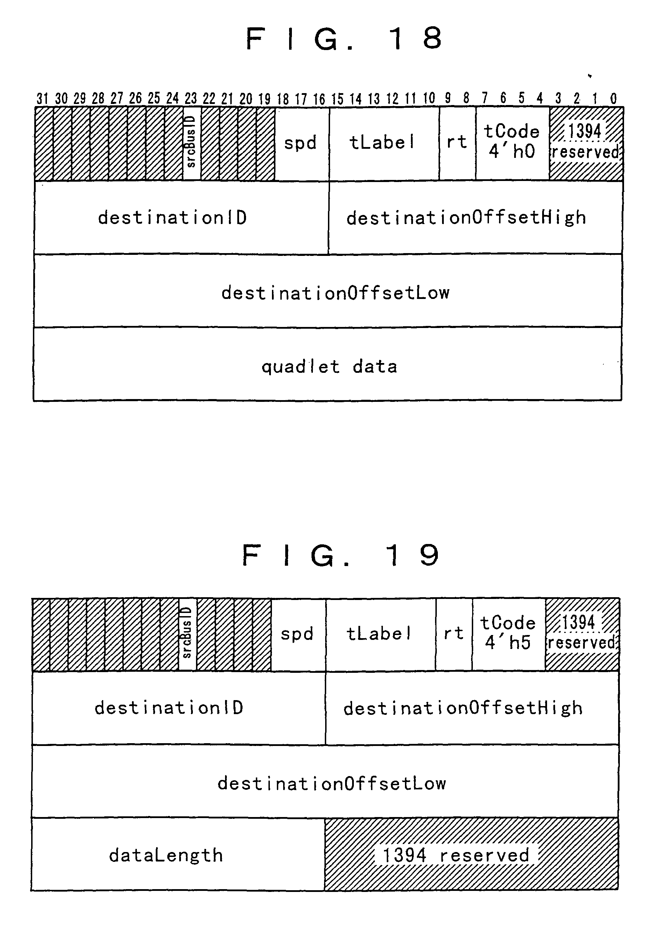

Fig. 18 shows a format of a transmission packet used for write quadlet request. To the transaction code (tCode), the value of "0" is set. Quadlet data is further added thereto, and data to be written is set to the field of the transaction code. The other fields are the same as those of the above mentioned transmission packet.

Fig. 19 is a diagram showing a format of the transmission packet used for read block request. To the transaction code (tCode), the value of "5" is set. In addition, data length (dataLength) is added to the transmission packet, and the length of data to be read is set thereto. The other fields are the same as those of the above mentioned transmission packet.

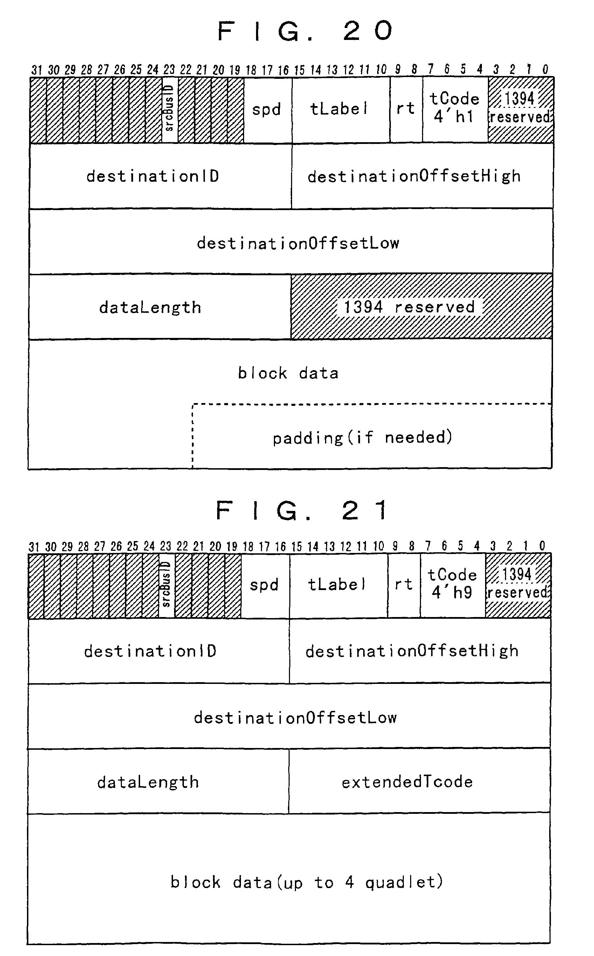

Fig. 20 is a diagram showing a format of the transmission packet used for write block request. To the transaction code (tCode), the value of "1" is set. In addition, block data (block data) is added, and the data to be transmitted is stored therein. If the block data is not in the unit of four bytes, padding is added so that the transmission packet is constituted by a multiple of four bytes. The value of padding is set to "0". The other fields are the same as those of the above-described packet.

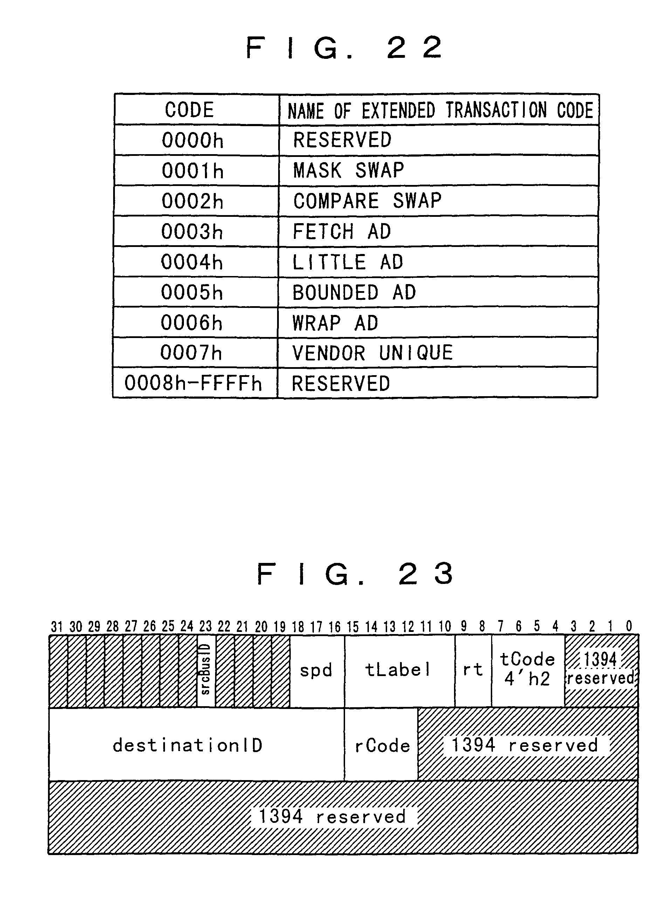

Fig. 21 is a diagram showing a format of the transmission packet used for lock request. To the transaction code (tCode), the value of "9" is set. In addition, extended transaction code (extendedTcode) is added, and the code for indicating the kind of the lock transaction is set thereto. The extended transaction code is defined by the IEEE1394 standard, and is as shown in Fig. 22.

Fig.23 is a diagram showing a format of the transmission packet used for write response. To the transaction code (tCode), the value of "2" is set. In addition, response code (rCode) is added, and the code for indicating the state of response is set thereto. The other fields are the same as those of the above-described packet.

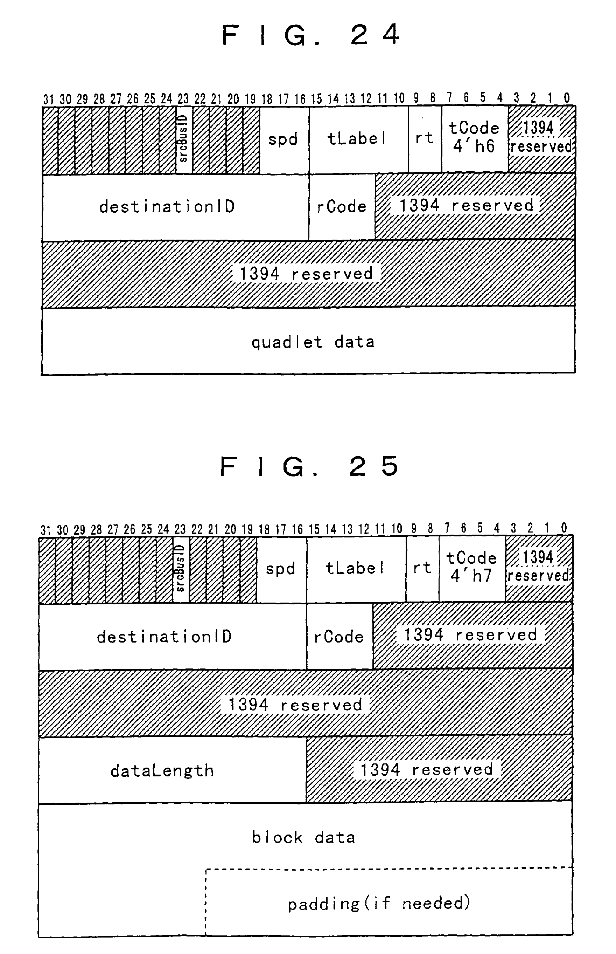

Fig. 24 is a diagram showing a format of the transmission packet used for read quadlet response. To the transaction code (tCode), the value of "6" is set. The other fields are the same as those of the above-described packet.

Fig. 25 is a diagram showing a format of the transmission packet used for read block response. To the transaction code (tCode), the value of "7" is set. The other fields are the same as those of the above-described packet.

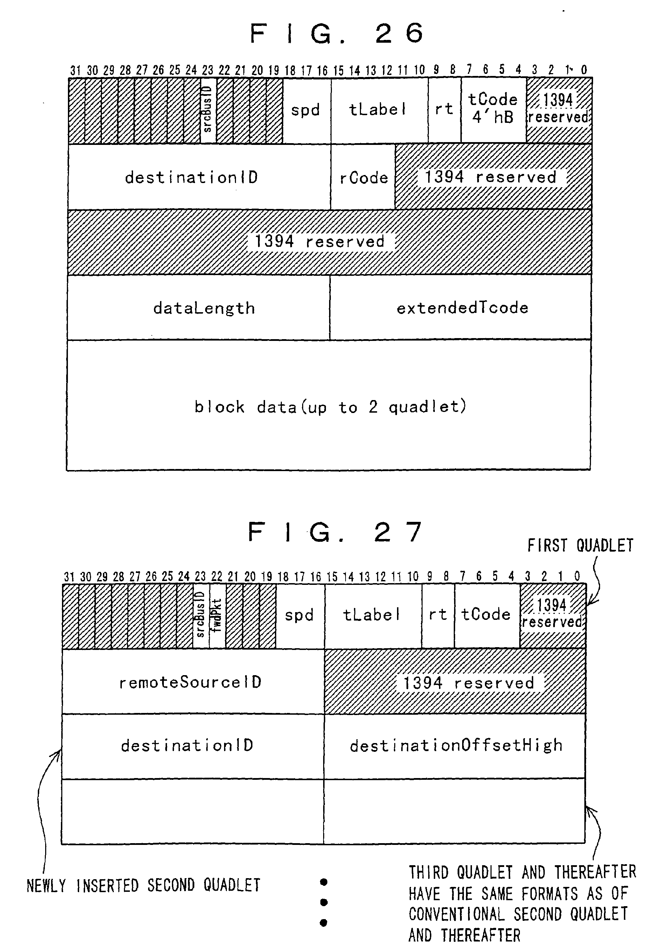

Fig. 26 is a diagram showing a format of the transmission packet used for lock response. To the transaction code (tCode), a code of "B" is set. The other fields are the same as those of the above-described packet.

The above-described packets are transmission packets used in asynchronous transmission executed in the 13940HCI. These packets are made on an assumption that the transmission end is a self-node, and therefore, is not aimed for use in that the transmission end is not a self-node, for example, such a case where the 1394-bridge portal forwards the packet to a remote address.

To overcome the disadvantage described above, in the present invention, a format of a new transmission packet is defined. Fig. 27 is a diagram showing a format of a transmission packet used for remote transmission. This transmission packet includes each field of a forward packet bit (fwdPkt), and remote source ID (remoteSourceID). The other fields are the same as those of a conventional packet.

Specifically, the forward packet bit (fwdPkt) is added to the first quadlet of the packet, and the remote source ID (remoteSourceID) is inserted to the second quadlet thereof. As to the above-described transmission packets (see Figs. 16, 18 to 21, and 23 to 26) defined by the 13940HCI described above for use in various asynchronous transmission, in each of them, a forward packet bit (fwdPkt) is added to the first quadlet, a remote source ID (remoteSourceID) is inserted into the second quadlet, and the fields which are conventionally positioned at the second quadlet and thereafter are shifted to the third quadlet and thereafter. In this manner, these packets become applicable to asynchronous transmission to a remote address.

The forward packet bit (fwdPkt) is used for determining whether the packet is associated with the asynchronous transmission in which the self-node is a transmission end, or the packet is associated with the asynchronous transmission in which a node of other bus is a transmission end and the packet has been sent via the 1394-bridge. For example, when the self-node is a transmission end, the forward packet bit (fwdPkt) is set to the value of "0". When a node of other bus is a transmission end, the forward packet bit (fwdPkt) is set to the value of "1".

If the forward packet bit (fwdPkt) is set to "1", the transmission end of this packet is a node of another bus. In this case, the node ID of the self-node is not used in the asynchronous transmission, but the node ID of the node of another bus is set as a source ID of the asynchronous data packet. A remote source ID (remoteSourceID) is used as a value for setting the node ID of the node of another node to the source ID of the asynchronous data packet. In other words, the node ID of the transmission end is set to the remote source ID. Contrarily, if the forward packet bit (fwdPkt) is set to "0", the transmission end of this packet is a self-node. In this case, the node ID of the self-node is set as source ID of the asynchronous data packet. At this time, the remote source ID (remoteSourceID) is neglected.

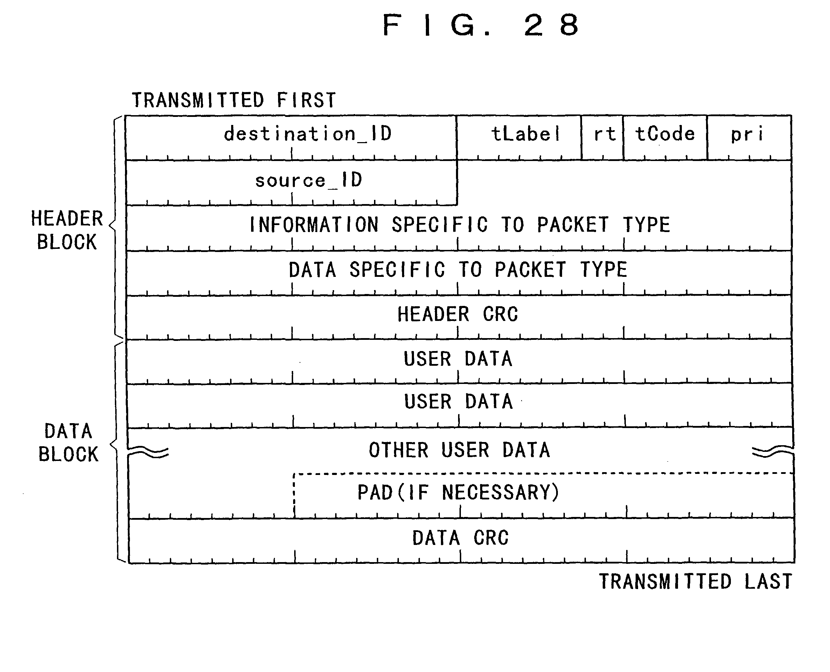

Fig. 28 is a diagram showing a data format of asynchronous data packet which conforms to the IEEE1394 standard. In the data packet, the header is constituted by destination ID (destination_ID), transaction label (tLabel), retry code (rt), transaction code (tCode), information about priority order (pri), source ID (source_ID), information specific to packet type (destination_offset, rcode, reserved), data specific to packet type (quadlet_data, data_lenmgth, extended_tcode), and header CRC.

When the forward packet bit (fwdPkt) is set to "0", as has been described above, the transmission is asynchronous transmission to the local address where the self-node is a transmission end. In this case, the transmission packet format conventionally defined by the 13940HCI may be employed as it is, without inserting the remote source ID (remoteSourceID) into the second quadlet.

Next, an operation of transmitting asynchronous data packet in the 1394-network shown in Fig. 14 will be described.

For example, in the asynchronous transmission from the node 104 connected to the 1394-bus 101 (Bus #1) to the node 105, this transmission is executed within the 1394-bus 101 (Bus #1), and is asynchronous transmission to a local address. In this case, if the node includes an interface unit for IEEE1394 digital serial data which uses the 1394OHCI, a transmission packet is transmitted from the 13940HCI section to the physical layer (PHY) section via the link layer (Link) section. In the link layer (Link) section, an asynchronous data packet is produced based on the transmission packet which has been transmitted thereto. Then, thus-produced asynchronous data packet is sent to the 1394-bus (Bus #1) via the physical layer (PHY) section. In this case, the forward packet bit (fwdPkt) in the transmission packet to be transmitted to the link layer (Link) section is set to "0". Therefore, when an asynchronous data packet is produced, the node ID of the self-node is used as the source ID (source_ID) of the synchronous data packet.

In another example, in the asynchronous transmission from the node 104 connected to the 1394-bus 101 (Bus #1) to the node 106 connected to the 1394-bus 102 (Bus #2), the access is executed to another bus, and the transmission is asynchronous transmission to the remote address. In this case, the asynchronous data packet which as been sent from the node 104 is temporality received by the bridge portal 103a which constitutes the 1394-bridge 103 connected to the 1394-bus (Bus #1). The asynchronous data packet which as been sent from the node 104 is, as is the case of the asynchronous transmission to the local address described above, the node ID of the node 104 is used as the source ID (source_ID) of the asynchronous data packet.

After that, the packet is transferred from the bridge portal 103a to the bridge portal 103b within the 1394-bridge 103. Then, the bridge portal 103 sends the packet to the node 106 connected to the 1394-bus (Bus #2). In the above-described manner, the asynchronous transmission is executed.

Hereinafter, an operation within the 1394-bridge 103 will be described in further detail shown in Fig.15.

The asynchronous data packet, which has been sent from the node 104, is received by the physical layer (PHY) section 126a of the bridge portal 103, and then, is transferred to the link layer (Link) section 125a. After that, the asynchronous data packet is transmitted to the memory 112 and stored therein through the FIFO section 123a, the DMA controller section 122a, and the host bus interface section 121a, which constitute the 1394OHCI section 124a together based on the specification of the 1394OHCI.

The contents of the asynchronous data packet, which has been stored in the memory 112 are checked by the CPU 111 for control, and as a result of the check, it is determined as an asynchronous data packet to the remote address. Then, the CPU 111 for control performs processing for transmitting the asynchronous data packet to the 1394-bus 102 (Bus #2).

This processing is performed by converting the asynchronous data packet into a transmission packet which conforms to the transmission packet format shown in Fig. 27. In this case, the node 104 connected to the 1394-bus 101 (Bus #1) is a transmission end, and the node of other bus is a transmission end. Therefore, the forward packet bit (fwdPkt) in the first quadlet is set to "1", and the node ID of the node 104 is inserted into the remote source ID (remoteSourceID) in the second quadlet.

The transmission packet, which has been produced by the CPU 111, is transmitted to the link layer (Link) section 125b through the host bus interface section 121b, the DMA controller section 122b, and the FIFO section 123b, which constitute the 1394OHCI section together based on the specification of the 1394OHCI. In the link layer (Link) section 125b, an asynchronous data packet is produced based on the transmission packet which has been transmitted thereto. The asynchronous data packet, which has been produced in the link layer (Link) section 125b, is sent to the 1394-bus 102 (Bus #2) in which the node 106 is present via the physical layer (PHY) section 126b.

In this case, the forward packet bit (fwdPkt) of the transmission packet which is transmitted to the link layer (Link) section 125b is set to "1". Therefore, when the asynchronous data packet is produced, the value of the remote source ID (remoteSourceID), that is, the node ID of the node 104 is used as the source ID (source_ID) of the asynchronous data packet.

As described above, in this embodiment, in the bridge portal 103b, the transmission packet which is transmitted from the 1394OHCI section 124b to the link layer (Link) section 125b is made to include a forward packet bit (fwdPkt) for indicating whether the transmission end of the transmission packet is a self-node, or the transmission end thereof is a node of other bus. When an asynchronous data packet is produced in the link layer (Link) section 125b based on the transmission packet, the source ID (source_ID) is set with reference to the forward packet bit (fwdPkt).

In this manner, it becomes possible to transmit an asynchronous data packet always including correct node ID of the transmission end from the physical layer (PHY) section 126b to the 1394-bus 102 (Bus #2). As a result of this, it becomes possible to allow the interface unit for IEEE1394 digital serial data which uses the 1394OHCI to be applied to the 1394-bridge, and to serve as a bridge portal.

According to the present invention, a first transmission packet including transmission end information for identifying whether the transmission end from which transmission information is transmitted is a self-node or another node residing in another bus is produced, and also a second transmission packet into which information for identifying the transmission end is inserted with reference to the transmission end information is produced based on the first transmission packet. In this manner, it becomes possible to transmit a transmission packet which always contains correct information for identifying a transmission end.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Various different aspect and features of the present invention are defined in the appended claims. Combinations of features from the dependent claims may be combined with features of the independent claims as appropriate and not merely as explicitly set out in the claims.

## Claims

1. An interface unit for digital serial data comprising:
a first packet producing means for producing a first transmission packet at least including transmission information, transmission end information for identifying whether a transmission end from which the transmission information is transmitted is a self-node or another node residing in another bus, and if the transmission end information indicates that the transmission end is another node, further including information for identifying another node; and
a second packet producing means for producing, based on the first transmission packet which has been produced by the first packet producing means, a second transmission packet at least including the transmission information, and node information about the transmission end from which the transmission information is transmitted, by use of identification information about the self-node as the node information about the transmission end when the transmission end information included in the first transmission packet indicates that the transmission end is a self-node, while by use of identification information about another node included in the first transmission packet when the transmission end information indicates that the transmission end is another node.

2. An interface unit for digital serial data comprising:
a physical layer section connected to a bus;
an open host controller interface section connected to a host bus; and
a link layer section inserted between the physical layer section and the interface section,
wherein a first transmission packet is sent from the interface section to the link layer section, and a second transmission packet is sent from the physical layer section to the bus,
wherein the first transmission packet at least includes transmission information, transmission end information for identifying whether a transmission end from which the transmission information is transmitted is a self-node or another node residing in another bus, and if the transmission end information indicates that the transmission end is another node, further includes identification information about another node, and
wherein the second transmission packet at least includes transmission information, and node information about a transmission end from which the transmission information is transmitted, and uses identification information about a self-node as node information about the transmission end when the transmission end information included in the first transmission packet indicates that the transmission end is a self-node, while uses identification information about another node included in the first transmission packet when the transmission end information indicates that the transmission end is another node.

3. An interface unit for digital data according to claim 2, wherein the bus connected to the physical layer section is an IEEE1394 bus.

4. A bridge portal constituting a bridge for connecting a plurality of buses, comprising:
a physical layer section connected to the bus,
a host controller interface section connected to a host bus; and
a link layer section inserted between the physical layer section and the interface section,
wherein a first transmission packet is sent from the interface section to the link layer section, and a second transmission packet is sent from the physical layer section to the IEEE1394 bus,
wherein the first transmission packet at least includes transmission information, transmission end information for identifying whether a transmission end from which the transmission information is transmitted is a self-node or another node residing in another bus, and if the transmission end information indicates that the transmission end is another node, further includes identification information about another node, and
wherein the second transmission packet at least includes transmission information, and node information about a transmission end from which the transmission information is transmitted, and uses identification information about a self-node as node information about the transmission end when the transmission end information included in the first transmission packet indicates that the transmission end is a self-node, while uses identification information about another node included in the first transmission packet when the transmission end information indicates that the transmission end is another node.

5. A bridge portal according to claim 4, wherein the buses connected to the physical layer section are IEEE1394 buses.

6. A method for transmitting digital serial data in an interface unit for digital serial data, comprising:
a first packet producing step for producing a first transmission packet at least including transmission information, transmission end information for identifying whether a transmission end from which the transmission information is transmitted is a self-node or another node residing in another bus, and if the transmission end information indicates that the transmission end is another node, further including information for identifying another node; and
a second packet producing step for producing, based on the first transmission packet which has been produced by the first packet producing means, a second transmission packet at least including the transmission information, and node information about the transmission end from which the transmission information is transmitted, by use of identification information about the self-node as the node information about the transmission end when the transmission end information included in the first transmission packet indicates that the transmission end is a self-node, while by use of identification information about another node included in the first transmission packet when the transmission end information indicates that the transmission end is another node.
